# EUROPÄISCHE PATENTANMELDUNG

(11) **EP 0 522 410 A1**
(43) Veröffentlichungstag der Anmeldung: **13.01.1993**
(21) Anmeldenummer: 92111001.1
(22) Anmeldetag: 29.06.1992
(51) Int. Cl.: F16L 15/00, F23J 13/02

(54) **Rohrstrang zur Bildung eines Rauchgas führenden Schornsteininnenrohres eines sanierungsbedürftigen Hausschornsteins, Verfahren zur Herstellung des Rohrstrangs und Anwendung desselben**

(30) Priorität: 28.06.1991 DE 4121557
(71) Anmelder: Schiedel GmbH & Co., D-80975 München (DE)
(72) Erfinder: Fischer, Günter, W-8016 Feldkirchen (DE); Pfeffer, Gerhard, W-8344 Hengersberg (DE); Popelyszyn, Elmar, W-8359 Schöllnach (DE)
(74) Vertreter: Dr. Elisabeth Jung Dr. Jürgen Schirdewahn Dipl.-Ing. Claus Gernhardt

(57) **Zusammenfassung**

Die Erfindung bezieht sich auf einen Rohrstrang zur Bildung eines Rauchgas führenden Schornsteininnenrohres eines sanierungsbedürftigen Hausschornsteins unter axialer Verbindung von gegen Rauchgas beständigen Metallrohren (2) eines Bausatzes von Metallrohren (2), deren paarweise miteinander verbundene Rohrenden (4, 6) unter relativer Verdrehung ineinander geschoben sind. Nach der Erfindung ist vorgesehen, daß die Metallrohre (2) des Bausatzes einwandig ausgebildet sind und daß die paarweise miteinander verbundenen Rohrenden (4, 6) der Metallrohre (2) des Bausatzes als komplementäre Schraubverbindungen ausgebildet sind. Die Erfindung betrifft ferner ein Verfahren zum Herstellen eines solchen Rohrstrangs und eine besondere Anwendung desselben.

## Beschreibung

Die Erfindung bezieht sich auf einen Rohrstrang zur Bildung eines Rauchgas führenden Schornsteininnenrohres eines sanierungsbedürftigen Hausschornsteins gemäß dem Oberbegriff von Anspruch 1. Die Erfindung betrifft ferner ein Verfahren zum Herstellen eines erfindungsgemäßen Rohrstrangs sowie eine Anwendung eines erfindungsgemäßen Rohrstrangs.

Unter dem Schornstein eines Hausschornsteins wird nach EG-Normung ein Schornstein verstanden, der nicht strukturell vom Haus unabhängig ist, also z.B. ein im Haus einbezogener oder an das Haus angesetzter Schornstein im Gegensatz zu einem im engeren Sinne freistehenden Schornstein. Bei der Hausschornsteinsanierung ergeben sich schwierige enge Einbauverhältnisse, selbst wenn man für den Einbau eines funtkionell neuen Rohrstrangs für die Rauchgasführung den alten Querschnitt zunächst etwas aufweitet.

Ein Rohrstrang zur Bildung eines Rauchgas führenden Schornsteininnenrohres eines sanierungsbedürftigen Hausschornsteins aus einem Bausatz einwandig ausgebildeter Metallrohre ist aus dem deutschen Gebrauchsmuster 71 35 735.2 bekannt. Bei diesem bekannten Bausatz ist am Außenumfang eines Endes eines Edelstahlrohres eine Muffe angeschweißt, so daß sich das Ende eines anschließenden Edelstahlrohres zwischen den Rohrkörper und die Muffe einschieben läßt. Diese Anordnung setzt unterschiedliche Rohrquerschnitte voraus. Der Außendurchmesser der Verbindung ist relativ groß. Die Herstellungsart ist aufwendig. Auch die Abdichtungsverhältnisse im Bereich der Anschlußfuge sind sehr zweifelhaft.

Auch die DE 37 35 507 C1 zeigt einen Rohrstrang zur Bildung eines Rauchgas führenden Schornsteininnenrohres eines sanierungsbedürftigen Hausschornsteins aus einem Bausatz einwandig ausgebildeter Metallrohre. Unter Verwendung von flexiblem Metallrohr wird am Außenumfang eines in das Anschlußrohr einzusteckenden Rohrendes eine Anzahl von radial federnd nachgiebigen Haltekrallen, die über den Rohrumfang verteilt sind, oder ein entsprechender radial nachgiebiger umlaufender Haltekranz angeschweißt und beim Einstecken in eine innen offene Sicke am übergeschobenen Ende des anschließenden Rohres eingerastet. Diese Anordnung setzt einen relativ großen Durchmesserunterschied der aneinander anzuschließenden Rohre voraus, da die Einrastmittel innerhalb des radialen Abstandes zwischen dem eingeschobenen und dem übergreifenden Rohrende durchschiebbar sein müssen. Dies bedingt wiederum erhebliche Abdichtschwierigkeiten. Auch ist die Herstellungsweise sehr aufwendig und bei der Montage störungsanfällig.

Die beiden genannten bekannten Rohrstränge für die Hausschornsteinsanierung haben sich auf dem Markt nach Kenntnis der Anmelderin nicht, oder jedenfalls nicht nennenswert, durchgesetzt. Man hat vielmehr bisher solche Rohrstränge für die Hausschornsteinsanierung üblicherweise derart gestaltet, daß das eine Rohrende aufgeweitet und muffenförmig über das anschließende unaufgeweitete Rohrende einer Paarung von einwandigen Metallrohren des Bausatzes aufgeschoben wird. Es gibt dabei eine ganze Reihe bekannter Möglichkeiten, eine solche Rohrverbindung durch zusätzliche übergreifende Mittel abzudichten und erforderlichenfalls zugfest zu verbinden. Weit verbreitet sind dabei übergeschobene Klemmringe mit verschiedenen Dichtungsmitteln und Klemmechanismen.

Bei allen angesprochenen vorbekannten Rohrsträngen werden aneinander anschließende einwandige Metallrohre einfach axial ineinandergeschoben.

Die Erfindung geht im Oberbegriff von Anspruch 1 von Rohrsträngen aus, bei denen doppelwandige Metallrohre des Bausatzes unter relativer Verdrehung ineinandergeschoben sind.

So ist es auch schon zur Bildung des Rohrstrangs eines Rauchgas führenden Schornsteininnenrohres eines sanierungsbedürftigen Hausschornsteins bekannt (Zulassungsbescheid JFBT Nr. Z-7, 1.63, Anlagen 2 und 3 vom 2.1.1985), ineinandergeschobene Enden von doppelwandigen Metallrohren eines entsprechenden Bausatzes um einen geringen Winkel von in der Praxis nicht mehr als eine Viertelumdrehung relativ zueinander zu verdrehen, um einen an den beiden zu verbindenden Rohrenden außen ausgebildeten Bajonettverschlußmechanismus miteinander in Eingriff bringen zu können. Diese Verbindungsweise ist ausschließlich außerhalb des Außendurchmessers der doppelwandigen Rohre angeordnet und trägt daher relativ weit radial auf. Ferner sind aufwendige Arbeiten zur Herstellung der Teile der Bajonettverbindung einschließlich aus der äußeren Rohrwand ausgestellter Laschen erforderlich, welche insoweit Durchbrechungen der äußeren Rohrwand erzeugen. Es ergeben sich wiederum erhebliche Abdichtungsprobleme. Die axiale und radiale Stellung der miteinander verbundenen Rohre ist dabei systembedingt invariabel.

Der Erfindung liegt die Aufgabe zugrunde, einen Rohrstrang zur Bildung eines Rauchgas führenden Schornsteininnenrohres eines sanierungsbedürftigen Hausschornsteins zu schaffen, welches im verbundenen Zustand der Metallrohre eines Bausatzes höchstens geringfügig radial aufträgt, verhältnismäßig geringe Abdichtungsprobleme im Verbindungsbereich ergibt, relativ einfach herstellbar ist, hohe Zugfestigkeit der Rohrverbindung gewährleistet und es vom System her ermöglicht, im Rahmen gewisser Grenzen die axiale und die Winkelstellung aneinander anschließender Rohre frei zu wählen.

Diese Aufgabe wird bei einem Rohrstrang mit den Merkmalen des Oberbegriffs von Anspruch 1 durch die kennzeichnenden Merkmale von Anspruch 1 gelöst.

Die Bajonettverbindung doppelwandiger Metallrohre hat man schon zur Herstellung neuer Haus- und Fabrikschornsteine variiert mit Anordnung der Bajonettverbindung zwischen dem von Wärmedämmstoff eingenommenen Raum zwischen Innenrohr und Außenrohr der Metallrohre, vgl. DE-U-78 20 996.

Schraubverbindungen von aneinander anzuschließenden einwandigen Metallrohren sind an sich altbekannt (nur beispielswiese die DE-U-74 20 596, 75 09 033, 78 25 572 und 82 18 466 sowie die FR-A-1 192 720, die US-PS 24 76 656 und 2 669 469 und die GB-A-330 123. Auch die im Freien verlegten Rohrleitungen für Rauchgasrohre, wie bei Ofenrohren (DE-PS 920 564, US-A-1 365 884 und 1 606 275) und Rohren sonstiger Feuerungsanlagen (DE-A1-3 509 774, US-A-1 706 525), hat man schon Schraubverbindungen einwandiger Metallrohre vorgesehen. Derartige Schraubverbindungen einwandiger Metallrohre haben jedoch bisher in den Schornsteinbau oder gar in die Schornsteinsanierung, mit der sich die Erfindung befaßt, keinen Eingang gefunden.

Dies mag daran liegen, daß man bisher eine relative Verdrehung von Innenrohren eines Schornsteins relativ zueinander über größere Winkel gescheut hatte, schon weil das übliche Montagepersonal darauf nicht eingestellt ist. Man hat vielmehr bisher Lösungen angestrebt, welche mindestens in Axialrichtung eine fixierte Anschlußlage der miteinander verbundenen Rohrenden sicherstellen. Auch war man möglicherweise dadurch durch die Übernahme von Verschraubungen von Metallrohren in den Bau zentraler Metallrohrstränge im Schornstein blockiert, als die Besorgnis bestand, Rohrabzweigungen, sei es im Heizungsraum, sei es zu einzelnen Feuerstätten oder Inspektions- und Wartungsöffnungen, nicht oder nur unter verhältnismäßig großem Planungs- und Montageaufwand auf die baulich vorgegebenen Verhältnisse ausrichten zu können. Diese Schwierigkeiten gelten besonders für die Arbeiten am Dach eines Hauses bei dessen Schornsteinsanierung, wenn der funktionell neue Rauchgas führende Rohrstrang im alten Rauchgas führenden Rohrstrang oder nach dessen teilweiser oder völliger Entfernung in dem dann immer noch sehr engen verbleibenden haushohen vertikalen Schacht im äußeren Schornsteinkörper eingebaut werden muß.

Der Bausatz von einwandigen Metallrohren für den erfindungsgemäßen Rohrstrang sieht eine Rohrverbindungsweise vor, die gänzlich ohne äußere Dicht- und Verbindungsmittel auskommen kann. Dadurch ist im Verbindungsbereich der durch die Verbindungsart bedingte radiale Überstand allenfalls sehr klein. Da bei der Schornsteinsanierung von Häusern Metallrohre regelmäßig dort eingesetzt werden, wo die räumlichen Durchmesserverhältnisse in dem bereits bestehenden Schornsteinkörper von vornherein sehr beengt sind, ergibt die bei dem Bausatz des erfindungsgemäßen Rohrstrangs vorgesehene Verbindungsart durch relative Verschraubung der Rohrenden ineinander eine optimale angepaßte Verbindungslösung. Die Verbindungsart ist dabei der Art nach zug- und knickfest gestaltbar. Wenn man ferner, wie dies vorzugsweise der Fall ist, bei der Herstellung der Schraubgewinde der Metallrohre des Bausatzes Präzisionsmaschinen einsetzt, kann man sogar ohne zusätzliche Dichtmittel selbst dann, wenn die Schraubverbindung nicht in einen Endanschlagseingriff gebracht wird, längs der Verbindungsstelle einen so geringen freien Querschnitt für austretende Gase und Dämpfe erhalten, daß die vorgeschriebenen Dichtheitswerte an dem Verbindungsbereich ohne Zusatzdichtungen eingehalten werden können. Dadurch besteht die Möglichkeit, die axiale Anschlußlage von Metallrohren je nach der gewählten Einschraubtiefe variabel einzustellen (vgl. auch Anspruch 39) und so nicht nur Toleranzen auszugleichen, sondern auch am Umfang von Metallrohren angebrachte Rohranschlußstützen auf äußere Anschlußverhältnisse nicht nur axial, sondern auch winkelmäßig auszurichten. Ergänzende Dichtungs- und Verbindungselemente sind daher im systemmäßigen Regelfall gänzlich entbehrlich. Probeweise durchgeführte Montagearbeiten haben gezeigt, daß auch das Montagepersonal auf die neue Montageart ohne übermäßige Intelligenzanforderungen umschulbar ist. Dabei läßt sich die Erfindung bei beliebiger üblicher Wandstärke der Metallrohre und beliebigen üblichen Metallarten realisieren. Dabei lassen sich im Regelfall Metallrohre des Bausatzes weitgehend untereinander austauschen. Auch bei Transport und Lagerung besteht geringe Beschädigungsgefahr wegen des Mangels radial überstehender Elemente. Dadurch, daß extreme Rohrverdickungen, wie etwa durch Muffenausbildungen oder Bajonettverschlüsse an den Rohrenden und dadurch bedingte knick- und scheranfällige Übergangsüberbereiche in den übrigen Rohrkörper vermieden werden, kann man im ganzen bei der Wahl der Wandstärke der Metallrohre an das bautechnisch zulässige Minimum gehen; dabei bewirken die ineinander verschraubten Abschnitte noch in erwünschter Weise zusätzliche Versteifungszonen.

Bei allen vorbekannten Bausätzen von Metallrohren für die Hausschornsteinsanierung, bei denen die axiale Lage der aneinander anschließenden Metallrohre zueinander fixiert ist, muß man am Bau mehr oder minder große Baulängen des hergestellten Rohrstranges ausgleichen, sei es, um Toleranzen auszugleichen, sei es um die vorgefertigten Baulängen der Metallrohre an die Verhältnisse des konkreten Baus anzupassen. Hierzu wurde bisher ein vorgefertigtes Metallrohr bauseitig auf die erforderliche Länge als distanzierendes Übergangsstück zugeschnitten. Dabei wird aus Zeitersparnisgründen häufig statt der vorgeschriebenen Schneidwerkzeuge, wie etwa einer Blechschere, einfach eine rotierende Trennscheibe verwendet, die im Schneidbereich hohe Reaktionswärmen erzeugt. Die durch das damit verbundene Ausglühen erzeugten negativen Materialveränderungen bilden dabei im fertigen Bauwerk verstärkt korrosionsanfällige Bereiche. Herstellerseitig ist bei der häufigen Akkordarbeit am Bau derartigem Montagepfusch schwer vorzubeugen, der dann aber im Reklamationsfall auf den Hersteller zurückschlägt. Im übrigen erfordert eine bauseitige Herstellung eines Distanzstücks auch bei fachgerechter Ausführung einschließlich erforderlicher Nacharbeitung, wie Entgraten, zusätzlichen Aufwand; wenn das Entgraten nicht ordnungsgemäß vorgenommen wird, kann es sogar zu Unfällen durch Schnittverletzungen kommen. Alle derartigen Maßnahmen sind bei dem Bausatz von Metallrohren des erfindungsgemäßen Rohrstrangs wegen der systembedingten Möglichkeit einer freien axialen Anpassung der Metallrohre relativ zueinander von vornherein nicht gegeben.

Weitere Gründe, weshalb man bisher im Schornsteinbau und insbesondere bei der Sanierung von Hausschornsteinen nicht die altbekannten einwandigen Metallrohre mit gegenseitiger Verschraubung verwendet hat, mögen folgende sein:
Die Ausbildung von für die Hausschornsteinsanierung geeigneten Schraubverbindungen an einwandigen Metallrohren erfordert neben dem schon angesprochenen höheren Montageaufwand auch höhere Herstellungskosten in der Größenordnung von 5 % über den Herstellungskosten bisher üblicher Hausschornsteinsanierungsrohre mit Muffen- oder Bajonettverbindung. Anders als bei sonstigen Freileitungen für Ofenrohre oder Rauchgasleitungen sonstiger Feuerungsanlagen muß dabei besonders darauf geachtet werden, daß die Metallrohre auf Dauer im sanierten Schornstein korrosionsfest sind und diese Korrosionsfestigkeit auch nicht durch die Verformungsgänge beim Herstellen der Schraubgewinde verloren haben. So kann man für die üblichen Muffen- und Bajonettverschlußrohre durchaus verhältnismäßig risikoarm billige Falzrohre verwenden. Solche Falzrohre sind jedoch für die bei dem erfindungsgemäßen Rohrstrang eingesetzten einwandigen Metallrohre mit Verschraubungen höchstens im Sonderfall geeignet. Man muß vielmehr für die Herstellung der Verschraubungen von vornherein hochwertige Metallrohre einsetzen, bei denen auch die Nähte bei Herstellung der Schraubgänge dicht und korrosionsfrei bleiben. Hierfür besonders geeignet sind moderne Metallrohre im Sinne von Anspruch 36 mit Stoßschweißung unter Schutzgas. Auf der Montageseite hat sich ferner ein reines axiales Einstecken eingebürgert, während die Erfindung im Grenzfall eine sofortige Drehbewegung beim Ineinanderfügen der Schraubgänge ineinander erfordert, was bei nicht sorgfältiger Durchführung außerdem Verkantungsgefahren mit sich führt. In Weiterbildung der Erfindung sind hierfür sogar besondere neue Ausbildungsformen von gegeneinander axial zu zentrierenden Schraubrohren entwickelt worden (vgl. die auf die Zentrierung von Rohren bezogenen Unteransprüche), um diesen Schwierigkeiten entgegenzuwirken und insbesondere wenigstens für die Anfangsphase des Zusammenfügens von Metallrohren einen axialen Einsteckvorgang beibehalten zu können.

Schließlich nimmt die Erfindung mit der Anordnung der inneren Verschraubungsprofile im das Rauchgas führenden Rohr auch noch das Risiko in Kauf, daß sich in diesen Profilen Ablagerungen des Rauchgases sammeln und im Bereich der inneren Verschraubungsgänge außerdem ein höherer Strömungswiderstand für das Rauchrohr gegeben ist.

Aus allen oben angesprochenen Gründen ist es daher verständlich, daß die Fachwelt bisher ein Vorurteil gegen den Einsatz der an sich altbekannten einwandigen Metallrohre mit gegenseitiger Verschraubung bei der Hausschornsteinsanierung hatte, soweit ersichtlich sogar allgemein beim Hausschornsteinbau.

Die Erfindung überwindet dieses Vorurteil.

Neben den schon angesprochenen Vorteilen des erfindungsgemäßen Rauchgasrohres, wie insbesondere der freien Winkeleinstellmöglichkeit und der Längenveränderlichkeit bei unterschiedlicher Einschraubtiefe, sind besonders die Biege- und Knickfestigkeit sowie die Belastungsfestigkeit zu erwähnen. So kommt es bei konventionellen einwandigen Rohren, die nur axial in entsprechende Aufnahmemuffen eingesteckt werden, infolge des Gewichts des Rohrstrangs und der verhältnismäßig geringen Wandstärke der hierbei verwendeten einwandigen Metallrohre schon bei relativ geringen Gewichtsbelastungen zu der Gefahr, daß ein oben liegender Bereich des Rohrstrangs nicht nur in die Muffe am oberen Ende eines unteren Metallrohres eingesteckt bleibt, sondern schließlich in den darunter befindlichen engeren Rohrbereich unter dessen gewichtsbedingter Aufweitung einsackt. Eine solche Gefahr ist bei der Verwendung des erfindungsgemäßen Rohrstrangs von vornherein beim Hausbau nicht oder kaum mehr gegeben. Dies gilt insbesondere für den Bau von Ein- und Mehrfamilienhäusern, für welche die Erfindung insbesondere eingesetzt wird, aber auch für den Bau von zur Sanierung dienenden Rohrsträngen bei vielgeschoßigen Häusern. Nun betrifft das Hauptsegment der Althäuser, für welche die Erfindung voraussichtlich zum Einsatz kommt, Ein- und Mehrfamilienhäuser. Bei diesen ist im allgemeinen nur im Kellerbereich eine Abzweigung zum Heizkessel und im oberen Bereich eine Abzweigung für einen oberen Reinigungsverschluß vorzusehen. Unabhängig von den speziellen Höhenmaßen derartiger Altbauten kann man daher über große Höhenbereiche des Hauses die Metallrohre sogar auf Gewindeanschlag montieren und die bei der Erfindung möglichen Ausgleichmaßnahmen in Winkel- und gegebenenfalls Längenrichtung nur örtlich zwischen bestimmten Rohrpaaren vorsehen. Dabei bleibt jedoch von vornherein die Möglichkeit bestehen, derartige Ausrichtmaßnahmen bei vorgefundenen Gegebenheiten auch in größerem Umfang vorzunehmen, beispielsweise pro Etage. Jedenfalls kann man sich jedoch immer auf die bei der Sanierung von Altbauten fest vorgegebenen Winkellagen und Höhenlagen von Abzweigungen einstellen.

Wenn eine Justierung um größere Längenbereiche in Anpassung an die Gegebenheiten des Altbaus erforderlich ist, reicht es dabei aus, wenn man im Sinne von Anspruch 37 ein besonderes Ausgleichstück nur oben am Rohrstrang anordnet und allenfalls kurze axiale Justierungen im unteren Bereich durch entsprechende Verdrehung der Verschraubungen gegeneinander vornimmt, falls überhaupt für axiale Anpassungen und nicht nur für Winkelanpassungen erforderlich.

Die größere Verschmutzungsgefahr innerer Gewindegänge durch Ablagerungen aus dem Rauchgas wird bewußt in Kauf genommen. Die dabei auch im Hinblick auf reduzierte Strömungsverhältnisse entstehenden Problemzonen brauchen dabei nur einen sehr kleinen axialen Anteil der ganzen Höhe des erfindungsgemäßen Rohrstrangs einzunehmen, z.B. weniger als 10 % der Gesamthöhe, so daß die dabei entstehenden Probleme in der Praxis von geringer Bedeutung sind. Man kann dabei auch die entstandenen Schwierigkeiten noch weiter minimieren durch Auswahl besonders angepaßter Schraubgeometrien, z.B. von Gewinden nach Anspruch 19. Solche im gewissen Umfang in Kauf zu nehmenden Schwierigkeiten werden jedoch bei weitem überkompensiert durch die im Vergleich zu den bekannten Rohrsträngen aus Metallrohren für die Schornsteinsanierung gegebene hohe Ausknickfestigkeit nur einwandiger Metallrohrstrukturen. Diese hohe Ausknickfestigkeit bedingt auch eine geringere Anzahl erforderlicher Abstandhalter für den Rohrstrang gegenüber der Innenwand des Schachtes im zu sanierenden Schornstein des Altbaus.

Als einfachste Verwirklichungsart der Erfindung erscheint die gemäß Anspruch 2. Hierbei erhält man im Verbindungsbereich eine Rohrradiusvergrößerung nur von wenig mehr als der Rohrwandstärke, wenn man dabei als Übermaß über die Rohrwandstärke eine radiale Resttoleranz im Verschraubungsbereich mit einbezieht. Man kann dabei sogar gemäß Anspruch 3 mit üblichem Nennrohrdurchmesser arbeiten. Wenn dabei aber die Verringerung des freien Innenquerschnittes des hergestellten Rohrstranges im Verschraubungsbereich als zu groß empfunden wird, kann man alternativ gemäß Anspruch 4 mit einem von vornherein etwas größeren Außendurchmesser des Metallrohres als dem Nennrohrdurchmesser arbeiten.

Die Merkmale des Anspruchs 5 ermöglichen es, im Prinzip - wenn man einmal von Sonderformen wie solchen mit seitlichem Rohranschluß absieht - mit einer einzigen Bauform der Metallrohre des Bausatzes auszukommen. Alternativ kann man auch gemäß Anspruch 6 mit mindestens zwei verschiedenen Bauformen im Bausatz arbeiten. Die Ausführungsform nach Anspruch 5 bietet demgegenüber jedoch in Ausführung der Anwendung nach Anspruch 38 den Vorteil, im Verbindungsbereich jeweils das obere Ende eines unteren Rohres mit dem unteren Ende eines oberen Rohres so überlappend zu umgreifen, daß kein Kondensat oder sonstige Flüssigkeit am äußeren Rohrstrang durch die Verbindungsfuge in das Innenrohr hineinlaufen kann. Entsprechend wirkt die noch wichtigere Anordnungsweise nach Anspruch 11 einem Hineinlaufen von an der Innenwandfläche des Rohrstrangs herablaufendem Kondensat in den Verbindungsringspalt entgegen.

Die Ansprüche 7 bis 10 zeigen Ausführungsformen der Metallrohre des Bausatzes, welche dem Monteur die Zentrierung aneinander anzuschließender Metallrohre erleichtern und es vor allem ermöglichen, bei der Montage des Rohrstrangs zunächst eine axiale Ineinanderführung der axial aneinander anschließenden Metallrohre vorzunehmen.

Die Ansprüche 12 bis 14 zeigen Sonderformen des erfindungsgemäßen Bausatzes, bei denen für besondere Anwendungsfälle die an sich gegebene axiale Verstellbarkeit durch hier vorgezogenen axialen Anschlag ersetzt wird. Dies mag beispielsweise dann vorteilhaft sein, wenn die sonst gegebene Restkriechstrecke für Gase und Dämpfe längs der Schraubverbindung durch Formschluß gänzlich unterbrochen sein soll.

Die Ansprüche 14 bis 17 befassen sich mit der im Rahmen der Erfindung auch gegebenen Möglichkeit, die schon erwähnte Restkriechstrecke für Gase und Dämpfe im Schraubverbindungsbereich zusätzlich innerhalb des Außendurchmessers der Rohre abzudichten.

Im Regelfall kann man die Erfindung mit eingängigen Gewinden ausführen, ohne daß dabei jedoch mehrgängige Gewinde ausgeschlossen sein sollen (vgl. Anspruch 18).

Aus Gründen schon der Blechbearbeitung werden vorzugsweise gerundete Gewinde im Sinne von Anspruch 19 vorgesehen. Dabei kann man auch abrupte Gefügeänderungen, wie etwa bei der Herstellung eckiger, z.B. trapezförmiger, Gewinde, und damit einhergehende Einreißgefahren des Rohres vermeiden. Systemmäßig ermöglichen gerundete Gewinde ein Abfließen von Kondensat, welches sonst korrodierend wirken könnte, sowie einen minimalen Strömungswiderstand im lichten Innenquerschnitt der hergestellten Rohrverbindung.

Die Merkmale der Ansprüche 20 bis 22 betreffen bevorzugte Bemessungen der Gewinde.

Die Ansprüche 23 und 24 zeigen die Möglichkeit, dem Rohrstrang im Rahmen des Bausatzes ein gesondertes Längenausgleichsstück zur Verfügung zu stellen, falls man nicht schon den gesamten Längenausgleich mittels der axialen freien relativen Wahl aneinander anschließender Metallrohre einstellen will. Die Möglichkeit gemäß Anspruch 23 hat besondere Bedeutung dann, wenn insonderheit von der zusätzlichen Anschlagsmöglichkeit im Gewindebereich, etwa nach Anspruch 12 oder 13, Gebrauch gemacht wird.

Die Ansprüche 25 bis 32 geben bevorzugte systemmäßige Ergänzungen des Bausatzes beim erfindungsgemäßen Rohrstrang an, mit denen dieser im Rahmen der Einschraubidee von Anspruch 1 zweckmäßig an zusätzliche Schornsteinkomponenten angepaßt werden kann. Die Merkmale des Anspruchs 29 haben dabei beispielsweise dann Bedeutung, wenn sowohl auf seiten des hergestellten Rohrstrangs als auch auf seiten einer außen vorgegebenen Bedingung, wie etwa an einem Heizkesselanschluß, mit geringerer Variabilität als in anderen Bereichen Rohranschlüsse hergestellt werden müssen (vgl. auch Anspruch 37).

Wenn die äußeren Abstandhalter nach Anspruch 31 an einem Klemmring ausgebildet sind, hat dieser zweckmäßig nach innen weisende haltende einzelne Aussteller, die in den äußeren Gewindegang am Rohrstrang eingreifen und entsprechend dessen Steigung verteilt sind.

Zu den Ansprüchen 26 bis 28 ist folgendes besonders zu vermerken:
Gerade bei der Schornsteinsanierung von alten Häusern steht schon in der Regel und bei besonders engen Schächten auch im besonderen nur ein sehr geringer Durchmesserbereich zum Einsetzen des funktionellen neuen erfindungsgemäßen Rauchgasrohres zur Verfügung. In manchen Fällen steht dabei insbesondere die für eine Schraubverbindung am abzweigenden Rohransatz erforderliche Gewindestrecke nicht mehr zur Verfügung, sei es von der Durchmessergeometrie an sich, sei es unter zusätzlicher Einbeziehung der Drehbewegung beim Verschrauben der Metallrohre des erfindungsmäßen Rohrstrangs. In solchen Fällen ist es zweckmäßig, den abzweigenden Rohrstutzen an einem entsprechend vorbereiteten Rohr des Bausatzes nur mit einer geringen Eigenlänge auszubilden und hier eine Steckverbindung für ein seitlich fortführendes Metallrohr vorzusehen, das dann seinerseits wieder aus miteinander verschraubten Rohren bestehen kann; denn diese weiterführenden Rohre werden ja erst nachträglich nach Einbau des erfindungsgemäßen Rohrstrangs in den vertikalen freien Schacht des verbliebenen Mauerwerks des Altschornsteins angesetzt. Eine solche Lösung wird insbesondere für den Anschluß der Heizanlage im Kellergeschoß vorgesehen.

Wenn es jedoch die Raumverhältnisse zulassen, wird man zweckmäßig bereits den abzweigenden Rohrstutzen mit einem Gewinde versehen und die ganze weiterführende Verrohrung, etwa zum Heizkessel der Heizanlage, auch durch miteinander verschraubte Metallrohre vornehmen.

Eine Abzweigung für Rohrinspektion gemäß Anspruch 27 mit einem Schraubverschluß bzw. verschraubten Deckel zu versehen, ist dabei gegenüber der bisher bekannten Technik bei Sanierungsrohren bereits an sich neuartig.

Wenn alle seitlichen Anschlußstutzen, z.B. an die Heizanlage und für Instruktionszwecke, im zuletzt erwähnten Sinne mit Schraubgewinden versehen sind, kann man sogar im Rahmen der Bausatzidee mit einem einzigen Typ von Metallrohren mit seitlichem Anschlußstutzen mit Schraubgewinde auskommen, also für verschiedene Anschlußzwecke im Rahmen des Bausatzes gleichartige Metallrohre vorsehen.

Die Ansprüche 33 bis 36 betreffen bevorzugte Eigenschaften der im Rahmen des erfindungsgemäßen Bausatzes eingesetzten Metallrohre.

Bei dem Bausatz des erfindungsgemäßen Rohrstrangs lassen sich die Gewinde an den Metallrohren besonders günstig dann fertigen, wenn die Metallrohre stoßgeschweißt sind. Insbesondere kommen dabei schutzgasgeschweißte Metallrohre in Frage (vgl. Anspruch 36). Als Schutzgasschweißung kommt insbesondere eine Plasmaschweißung, eine Laserschweißung oder eine sogenannte WIF-Schweißung in Frage (WIG = Wolframinertgas, d.h. Schweißung mit Wolfram-Elektrode und Intertgas als Schutzgas).

Die Metallrohre sind insbesondere rost- und säurebeständige Stähle mit den DIN-Werkstoffnummern 1.4301, 1.4404 oder 1.4571. In der genannten Reihenfolge handelt es sich dabei um die Kurznamen nach DIN-Norm: X5 CrNi 15 9, X2 CrNiMo 15 10 und X10 CrNiMoTi 13 10.

Im Normalfall wird man die Metallrohre des Bausatzes mehr oder minder gemeinsam zur Verfügung stellen, etwa gemeinsam alle Metallrohre für einen bestimmten Schornsteinsanierungsfall mit bereits bestehendem Außenmauerwerk.

Ein Rauchgasrohr in Verwendung als Schornsteininnenrohr wird normalerweise unter thermisch bedingtem Unterdruck betrieben; sogenannte "Abgasleitungen" stellen Sonderfälle dar, bei denen das Schornsteininnenrohr die mit Überdruck betrieben wird. Der Anwendungsanspruch 39 zeigt, daß der erfindungsgemäße Rohrstrang sogar den erschwerten Bedingungen dieses Sonderfalls genügt.

Das Herstellungsverfahren nach Anspruch 40 trägt besonders den speziellen Bedingungen einer Hausschornsteinsanierung Rechnung, bei dem das äußere Schornsteinmauerwerk bereits vorgegeben ist, gegebenenfalls nach Nachbearbeitung.

Die Erfindung wird im folgenden anhand schematischer Zeichnungen an mehreren Ausführungsbeispielen noch näher erläutert. Die vertikale Ausrichtung der Metallrohre in der Darstellungsebene entspricht dabei insbesondere der Höhenanordnung der Metallrohre im erfindungsgemäßen Rohrstrang. Es zeigen:
Fig. 1 in seitlicher Ansicht zwei gleiche Metallrohre des Bausatzes des Rohrstrangs;
Fig. 2 in seitlicher Ansicht zwei unterschiedliche Metallrohre des Bausatzes des Rohrstrangs;
Fig. 3 in seitlicher Ansicht zwei Rohrenden, von denen das obere ein Außengewinde und das innere ein Innengewinde mit Zentrierungsansatz darstellt;
Fig. 4 eine Abwandlung von Fig. 3 mit unterschiedlich ausgebildetem Zentrierungsansatz;
Fig. 5 zwei Rohrenden von Metallrohren mit konisch verlaufendem Gewinde;
Fig. 5a eine seitliche Ansicht eines einzelnen Metallrohres mit sich über das ganze Metallrohr erstreckendem Hüllkonus;
Fig. 6 eine seitliche Ansicht zwei zusammenwirkender Rohrenden mit eingelegtem Dichtungsring;
Fig. 7 einen radialen Teilschnitt durch zwei ineinandergeschraubte Rohrenden von Metallrohren des Bausatzes des Rohrstrangs mit vergrößerter Darstellung des Gewindes;
Fig. 8 die Darstellung eines Rohrendes mit geschlossenem Boden und Kondensatablauf;
Fig. 9 eine seitliche Halbansicht eines Metallrohres des Rohrstrangs mit seitlichem Rohranschluß und weiterführendem Rauchgasrohr;
Fig. 9a eine seitliche Ansicht eines das Rauchgasrohr von Fig. 9 ersetzenden Rohrabschlusses;
Fig. 10 eine seitliche Ansicht eines für einen seitlichen Anschluß dienenden Distanzstückes; und
Fig. 11 eine seitliche Ansicht eines im Rohrstrang einsetzbaren Distanzstückes.

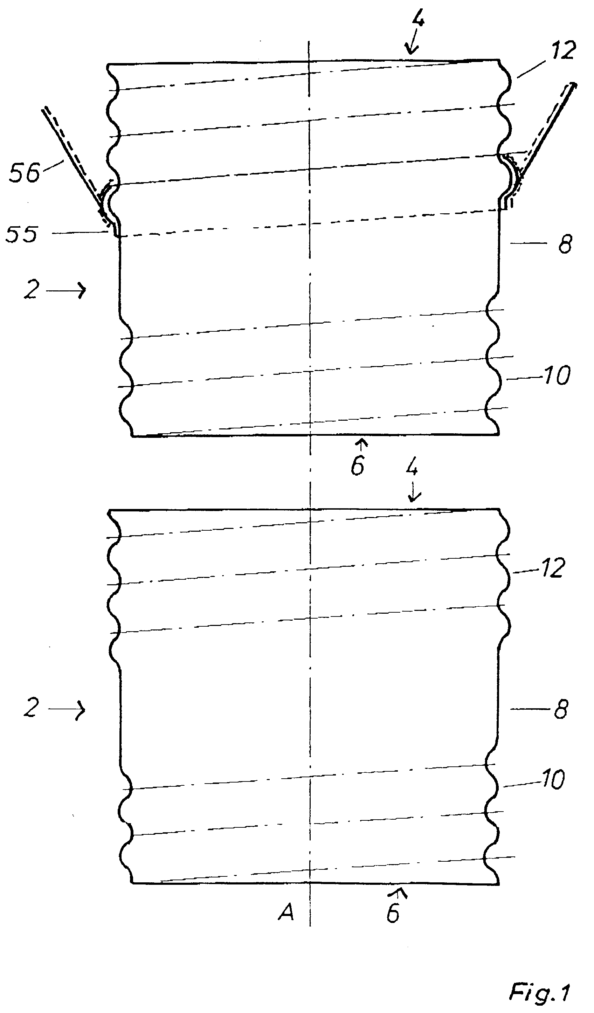

In Fig. 1 sind zwei Metallrohre 2 des Rohrstrangs mit Rohrenden 4 und 6 und dazwischenliegendem Rohrkörper 8 dargestellt, wobei die beiden Metallrohre 2 identisch ausgebildet sind. Die Rohrenden 4 haben dabei ein Außengewinde 10 und die entgegengesetzten Rohrenden 6 ein Innengewinde 12. Das Außengewinde 10 eines Metallrohres und das Innengewinde 12 eines anderen Metallrohres wirken dabei als Schraubverbindung zusammen. Der Rohrkörper 8 hat entweder einen Außendurchmesser entsprechend dem Nenndurchmesser im zu sanierenden Hausschornstein oder einen etwas größeren Nenndurchmesser. Der Außendurchmesser des Innengewindes 10 - also gemessen an den Scheiteln der Gewindegänge - ist dabei gleich dem Außendurchmesser des Rohrkörpers 8, während die Gewindegänge im Innengewinde 12 mindestens teilweise über den Außendurchmesser des Rohrkörpers 8 radial hervorstehen.

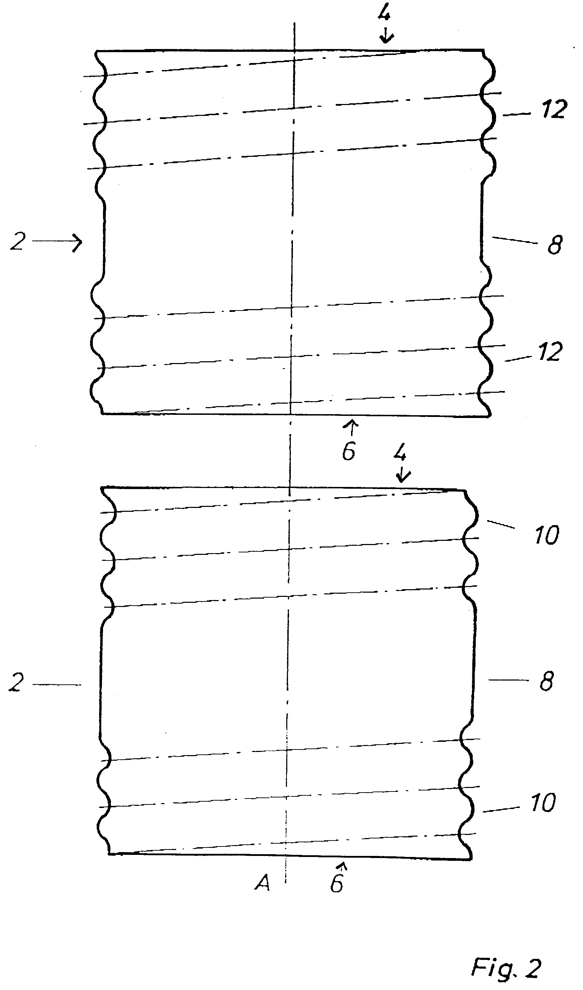

Die Darstellung von Fig. 2 entspricht der Darstellung von Fig. 1 mit der einen Ausnahme, daß die beiden Metallrohre 2 unterschiedlich ausgebildet sind. Das oben dargestellte Metallrohr hat an seinen beiden Enden 4 und 6 nur Innengewinde, während das unten dargestellte Metallrohr nur Außengewinde 10 aufweist.

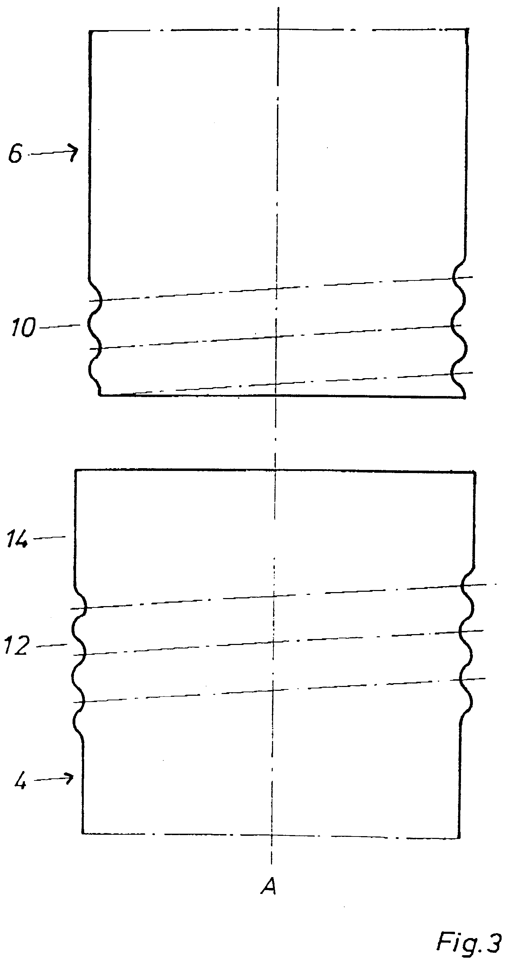

In Fig. 3 ist ein Rohrende 6 mit Außengewinde 10 dargestellt, welches einem Rohrende 4 mit Innengewinde 12 axial gegenüberliegend angeordnet ist. Die räumliche Anordnung von Innengewinde 12 und Außengewinde 10 in bezug auf den Rohrkörper 8 ist dabei gleich wie in den Fig. 1 und 2. Zusätzlich ist jedoch das Innengewinde 10 mit einem Ansatz 14 axial verlängert, welcher einen größeren Innendurchmesser als der Außendurchmesser des Außengewindes 10 des anderen Rohrendes 6 hat und somit für dieses Außengewinde beim Ineinanderstecken als Zentrierstrecke dienen kann. Der Ansatz 14 ist in Fig. 3 zylindrisch geformt.

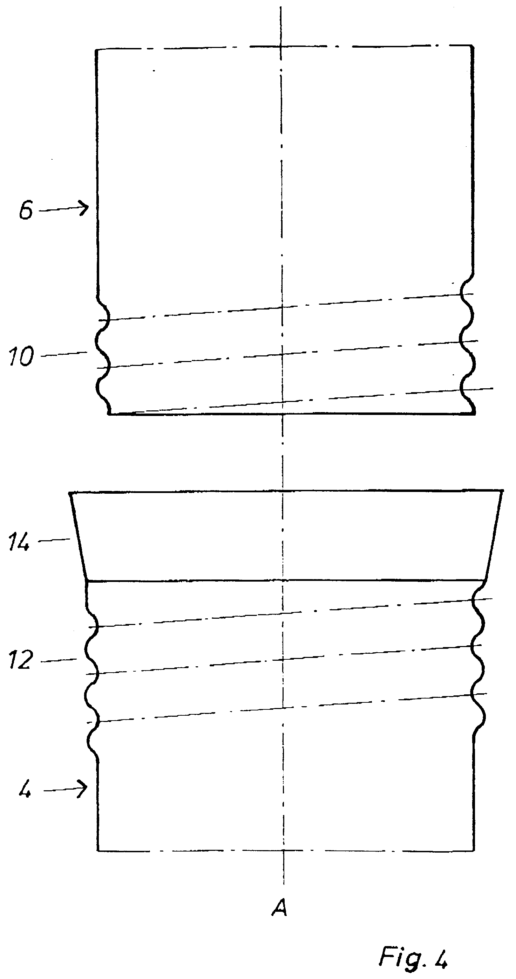

Fig. 4 entspricht der Darstellung gemäß Fig. 3 mit der einen Ausnahme, daß der Ansatz 14 am Rohrende 4 nicht zylindrisch, sondern sich konisch nach außen erweiternd ausgebildet ist.

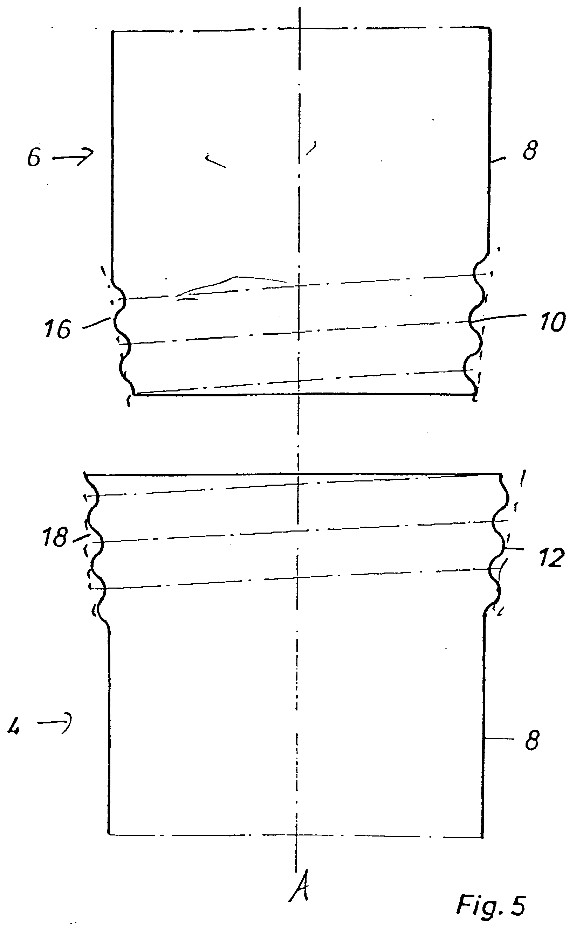

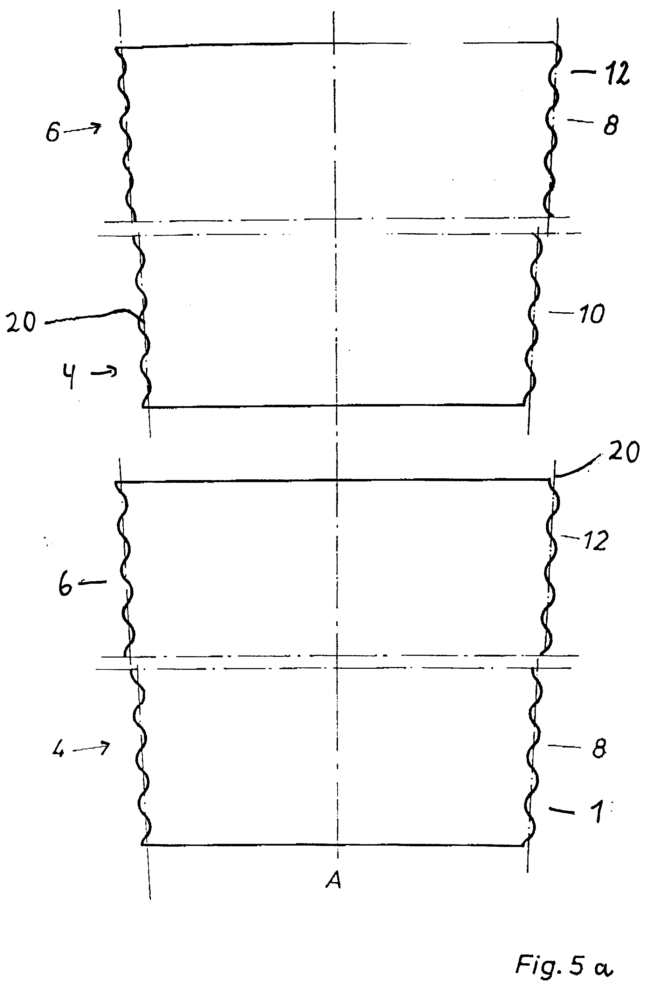

Fig. 5 zeigt eine weitere Zentrierungsmöglichkeit. Hier ist auf einen Zentrierungsansatz 14 der Fig. 3 und 4 bei sonst gleicher Darstellungsweise verzichtet. Stattdessen verlaufen das Außengewinde 10 und das Innengewinde 12 jeweils längs eines sich nur längs der Gewinde erstreckenden Hüllkonus 16 bzw. 18, wobei die beiden Hüllkonusse gleiche Konuswinkel haben.

Fig. 5a zeigt an einem einzigen Metallrohr eine Variante, bei der sich ein einziger Hüllkonus 20 über die ganze Rohrlänge einschließlich des Rohrkörpers 8 und des an den beiden Rohrenden 4 und 6 verlaufenden Gewindes mit Außengewinde 10 und Innengewinde 12 erstreckt (vgl. sonst Fig. 1).

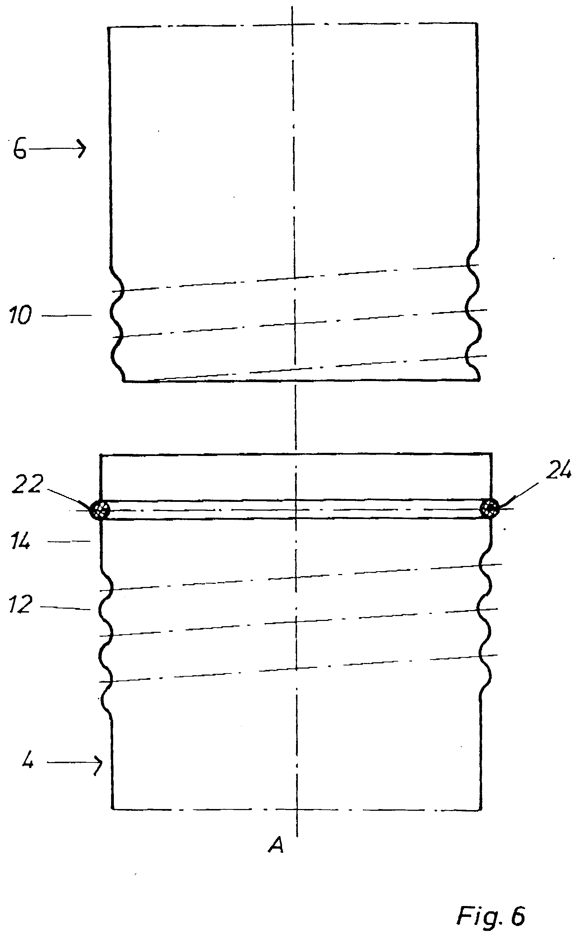

Fig. 6 entspricht Fig. 3 mit der Besonderheit, daß im Ansatz 14 eine Außensicke 22 ausgebildet ist, in welcher innen ein O-Ring als Ringabdichtung 24 eingelegt ist.

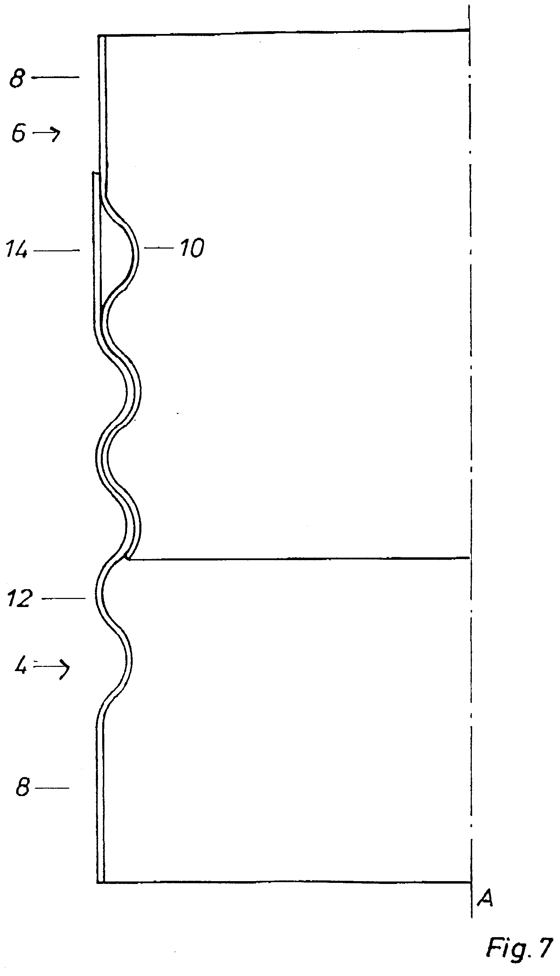

Wiederum unter Bezug auf die Darstellung von Fig. 3, aber auch zur Veranschaulichung der anderen vorgenannten Ausführungsformen, ist in Fig. 7 vergrößert dargestellt, daß das Außengewinde 10 und das Innengewinde 12 als Rundgewinde ausgebildet sind und dabei mit großer Präzision komplementär gestaltet sind.

Alle bisher beschriebenen Ausführungsformen sind auf eine Rohrachse des Rohrstrangs A bezogen und für den Sonderfall von zwei voll umlaufenden eingängigen Gewinden im Bereich des Innengewindes 12 bzw. des Außengewindes 10 dargestellt. Mindestens sollte ein Gewindegang voll um 360° umlaufen.

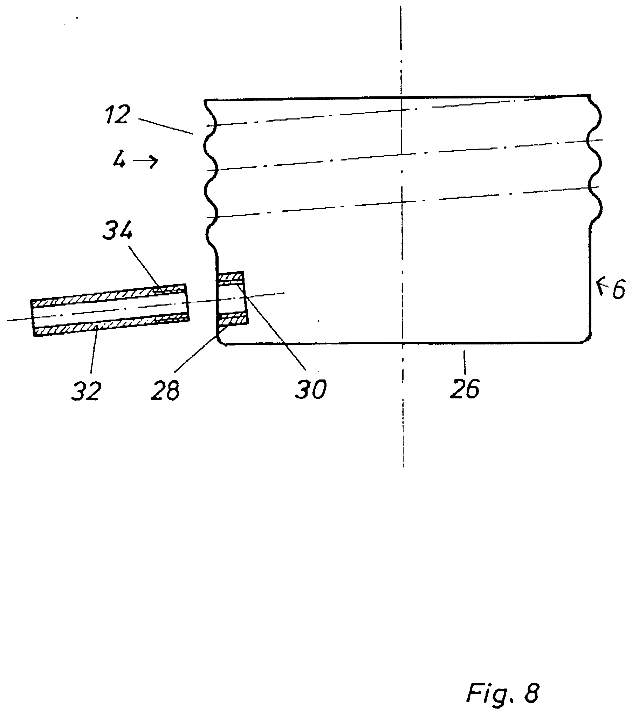

Der Bausatz ist im Rohrstrang in erster Linie durch die beschriebenen Metallrohre 2 in gleicher oder verschiedener Ausgestaltung gekennzeichnet. Dieser Bausatz ist dann noch systemmäßig ergänzt, wie es anhand der Fig. 8 bis 11 an einigen Ergänzungselementen veranschaulicht ist.

So zeigt Fig. 8 eine Sonderform eines Metallrohres, welches nur an seinem Rohrende 4 mit einem Innengewinde 12 versehen ist. Das andere Rohrende 6 ist ohne Gewinde ausgebildet, sondern weist an seinem freien Ende einen als unteren Abschluß des herzustellenden Rohrstrangs dienenden flachen Rohrboden 26 auf. Dadurch dient das in Fig. 8 dargestellte Rohr als Kondensatauffangschale, welche in das Innengewinde eines oben anschließenden Metallrohres 2 des Standard-Bausatzes unten einschraubbar ist. Zum Ablauf von Kondensat kann am Umfang ein Anschluß 28 mit Innengewinde 30 an der Oberseite des Rohrbodens 26 vorgesehen sein. Zur Weiterleitung des Kondensates kann bedarfsweise ein Rohrleitungsstück 32 mit an seinem einen Ende ausgebildetem Außengewinde 34 dienen, welches in das Innengewinde 30 des Anschlusses 28 einschraubbar ist.

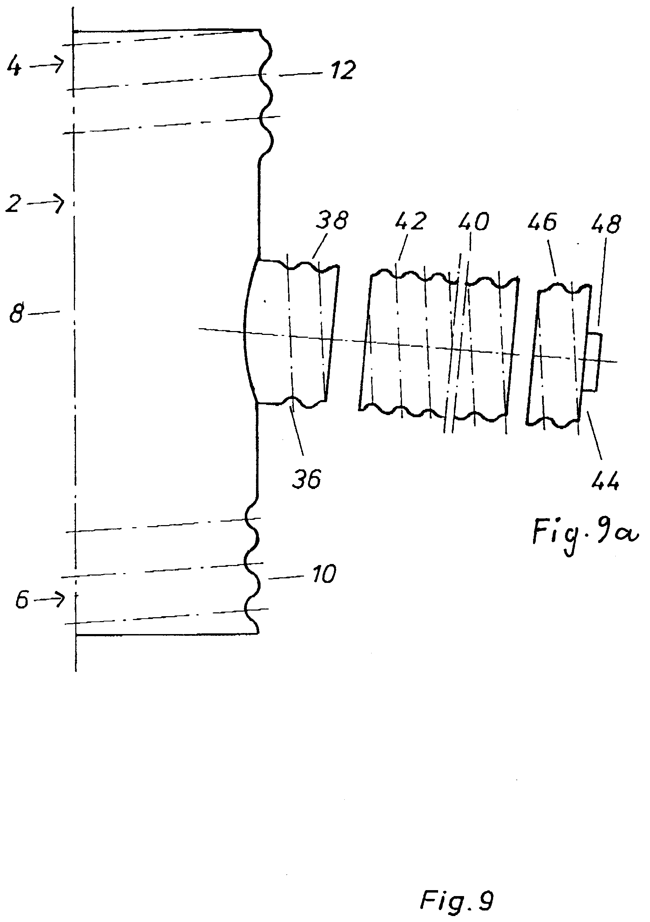

In Fig. 9 ist ein Metallrohr 2 entsprechend den Metallrohren von Fig. 1 mit einem Innengewinde 12 an seinem einen Rohrende 4 und mit einem Außengewinde 10 an seinem anderen Rohrende 6 dargestellt. Der Rohrkörper 8 hat hier an einer Stelle seines Umfangs eine Rohrabzweigung 36 mit Außengewinde 38, an welche ein Rauchrohranschluß 40 mit Innengewinde 42 an seinem einen Rohrende anschraubbar ist.

Wenn die Rohrabzweigung 36 nicht genutzt wird oder nur als Inspektions- oder Wartungs- bzw. Reinigungsöffnung dient, kann die Rohrabzweigung 36 auch durch den Schraubverschluß 44 gemäß Fig. 9a abschließbar sein, welches ein Innengewinde 46 hat. Der Schraubverschluß kann mittels eines Handgriffes 48 auf das Außengewinde 38 aufgeschraubt werden.

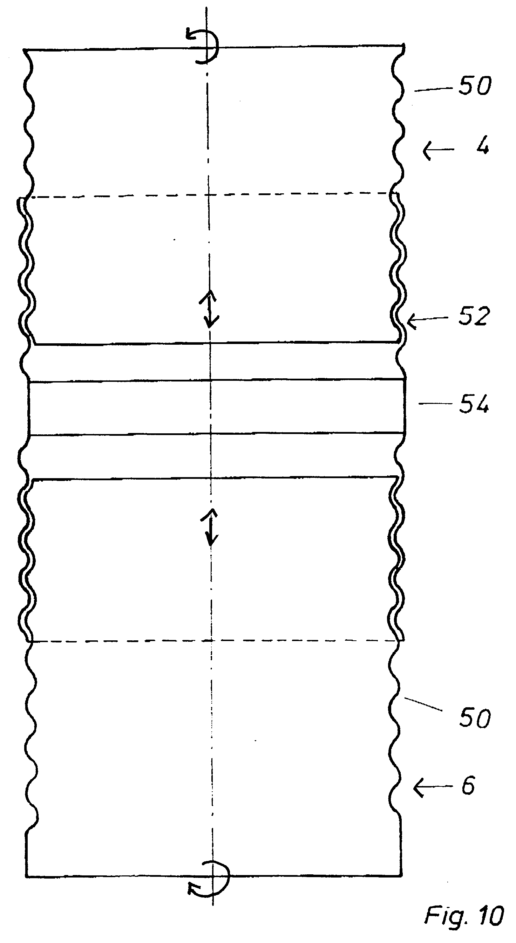

Fig. 10 beschreibt eine Speziallösung für den Fall, daß nicht wie im Fall der Fig. 9 der Rauchrohranschluß 40 in die Rohrabzweigung 36 hineingedreht werden kann. Das kann z.B. dann der Fall sein, wenn der Rauchrohranschluß 40 so stark abgewinkelt ist, daß er in einem Anschlußraum nicht mehr voll drehbar ist. Das kann aber auch dann der Fall sein, wenn es sich bei dem Rauchrohranschluß 40 um das Anschlußrohr eines feststehenden Heizkessels handelt.

In Fig. 10 kann dann beispielsweise das Rohrende 4 von der Rohrabzweigung 36 gemäß Fig. 9 und das Rohrende 6 von dem Rauchrohranschluß 40 gebildet sein. Alternativ kann aber auch der Rauchrohranschluß 40 in zwei Rohrabschnitte unterteilt sein, die dann über die Rohrenden 4 und 6 gemäß Fig. 10 aneinander anschließen. In diesen Fällen haben die beiden Rohrenden 4 und 6 beide je ein Außengewinde 50 mit zueinander gleichem Gewindesinn. Über die beiden Außengewinde 50 läßt sich zur Verbindung der beiden Rohrenden 4 und 6 eine Überwurfhülse 52 aufschrauben, die jedoch an ihrem einen Ende ein Links-Innengewinde und an ihrem anderen Ende ein Rechts-Innengewinde hat. Zwischen beiden Innengewinden kann dann noch ein glatter Hülsenteil 54 verbleiben.

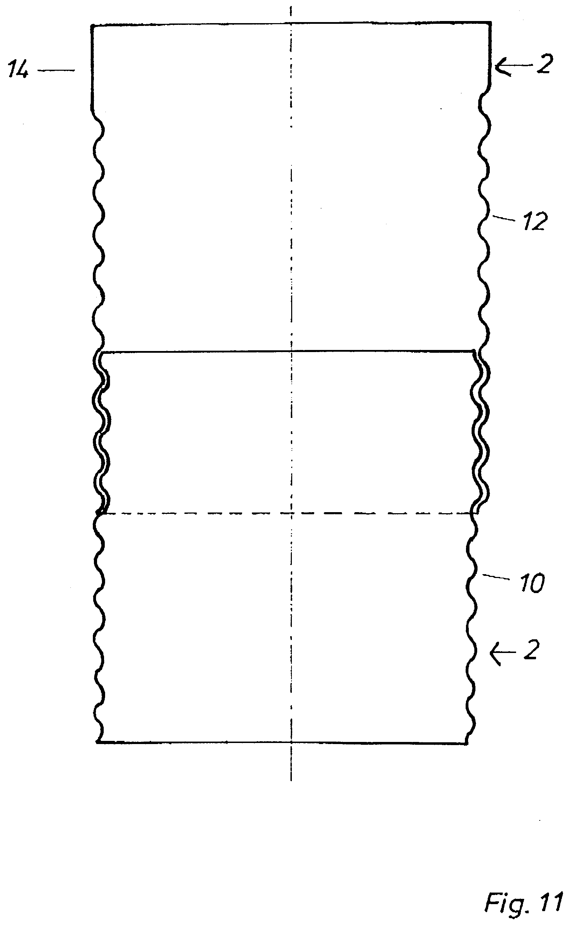

Fig. 11 zeigt ein als Sonderzubehör dienendes Metallrohr 2, welches als längenveränderbares Distanzstück innerhalb des eigentlichen vertikalen Rohrstranges dienen kann. Dieses Distanzierrohr ist hier aus zwei Metallrohren 2 zusammengesetzt. Bei dem einen Metallrohr 2 verläuft ein Außengewinde 10 über die ganze Rohrlänge und bei dem anderen Metallrohr 2 verläuft ein Innengewinde 12 über die ganze Rohrlänge mit Ausnahme eines hier ohne Beschränkung der Allgemeinheit im Rahmen der Darstellung der sonstigen Ausführungsbeispiele als Justierstrecke dienenden zylindrischen Ansatzes 14.

Am oberen Metallrohr 2 der Darstellung gemäß Fig. 1 ist schließlich noch ohne Beschränkung der Allgemeinheit bezüglich der sonstigen dargestellten und beschriebenen Ausführungsformen gestrichelt verdeutlicht, daß wenigstens einige Metallrohre des Rohrstrangs auch noch radiale Abstandhalter tragen können. Hierzu ist auf die schraubenförmige Außenkontur des Innengewindes 10 ein Schraubring 55 mit Innengewinde aufgeschraubt, der die über den Umfang verteilten radialen Abstandhalter 56 trägt.

Entsprechend kann man ganz allgemein bei dem Bausatz des erfindungsgemäßen Rohrstrangs die von den Innengewinden 10 außen gebildeten Schraubengänge auch noch für andere Systemelemente zum Aufschrauben mit nutzbar machen, z.B. am oberen Strangende für eine Dehnfugenausbildung, regenabweisende Krägen usw.

## Patentansprüche

1. Rohrstrang zur Bildung eines Rauchgas führenden Schornsteininnenrohres eines sanierungsbedürftigen Hausschornsteins unter axialer Verbindung von gegen Rauchgas beständigen Metallrohren (2) eines Bausatzes von Metallrohren (2), deren paarweise miteinander verbundene Rohrenden (4,6) unter relativer Verdrehung ineinander geschoben sind,
**dadurch gekennzeichnet**,
daß die Metallrohre (2) des Bausatzes einwandig ausgebildet sind, und
daß die paarweise miteinander verbundenen Rohrenden (4,6) der Metallrohre (2) des Bausatzes als komplementäre Schraubverbindungen ausgebildet sind.

2. Rohrstrang nach Anspruch 1, dadurch gekennzeichnet, daß die Gewindegänge der Außengewinde (10) der Schraubverbindungen einen Außendurchmesser höchstens gleich, vorzugsweise gleich, dem Rohraußendurchmesser haben, und daß die Gewindegänge der Innengewinde (12) der Schraubverbindungen an einer Rohrerweiterung ausgebildet sind, deren Radius mindestens um die Rohrwandstärke größer ist als der Rohraußendurchmesser.

3. Rohrstrang nach Anspruch 1 oder 2, dadurch gekennzeichnet, daß der Rohraußendurchmesser der Metallrohre (2) des Bausatzes gleich dem Nennrohrdurchmesser gewählt ist.

4. Rohrstrang nach Anspruch 1 oder 2, dadurch gekennzeichnet, daß der Rohraußendurchmesser der Metallrohre (2) des Bausatzes 1 bis 5 mm, vorzugsweise 1 bis 3 mm, größer als der Nennrohrdurchmesser gewählt ist.

5. Rohrstrang nach einem der Ansprüche 1 bis 4, dadurch gekennzeichnet, daß die Metallrohre (2) des Bausatzes an ihrem einen Ende (6) mit einem Außengewinde (10) und an ihrem anderen Ende (4) mit einem Innengewinde (12) ausgebildet sind (Fig. 1).

6. Rohrstrang nach einem der Ansprüche 1 bis 4, dadurch gekennzeichnet, daß eine Gruppe der Metallrohre (2) des Bausatzes an beiden Enden mit Außengewinden (10) und eine andere Gruppe der Metallrohre (2) des Bausatzes an beiden Enden mit Innengewinden (12) ausgebildet sind (Fig. 2).

7. Rohrstrang nach einem der Ansprüche 1 bis 6, bei dem die axial verbundenen Rohrenden (4) der Metallrohre (2) des Bausatzes axial zentriert sind, dadurch gekennzeichnet, daß Zentrierstrecken (14) axial außen an die Innengewinde (12) anschließen.

8. Rohrstrang nach Anspruch 7, dadurch gekennzeichnet, daß die Zentrierstrecken (14) als zylindrische Hüllen ausgebildet sind, deren Außendurchmesser dem Außenradius des jeweils anschließenden Innengewindes (12) entspricht.

9. Rohrstrang nach Anspruch 8, dadurch gekennzeichnet, daß die Zentrierstrecken (14) mit einem Zentrierkonus ausgebildet sind.

10. Rohrstrang nach Anspruch 7, dadurch gekennzeichnet, daß die Zentrierstrecken (14) als Zentrierkonus ausgebildet sind (Fig. 4).

11. Rohrstrang nach einem der Ansprüche 1 bis 10, dadurch gekennzeichnet, daß nur das obere Rohrende (4) eines Paars von axial anschließenden Metallrohren (2) des Bausatzes unter Umfassung des unteren Rohrendes (6) des anderen Metallrohres (2) mit einer Zentrierstrecke (14) ausgebildet ist.

12. Rohrstrang nach einem der Ansprüche 1 bis 11, dadurch gekennzeichnet, daß die Gewinde (10, 12) längs eines Hüllkonus (16, 18) ausgebildet sind.

13. Rohrstrang nach einem der Ansprüche 1 bis 5, 7 oder 9 bis 12, dadurch gekennzeichnet, daß der Hüllkonus der Gewinde (10, 12) Bestandteil eines Hüllkonus (20) über die ganze axiale Länge des Metallrohres (2) ist (Fig. 5a).

14. Rohrstrang nach einem der Ansprüche 7 bis 13, dadurch gekennzeichnet, daß die Zentrierstrecke (14) mit einer umlaufenden Außensicke (22) mit aufgenommener oder zur Aufnahme einer vorgefertigten, radial nach innen wirksamen Ringabdichtung (24) ausgebildet ist.

15. Rohrstrang nach einem der Ansprüche 1 bis 14, gekennzeichnet durch vordosierte oder dosierbare temperaturbeständige Dichtmassen für eine innere Ringabdichtung der Schraubverbindungen (10, 12).

16. Rohrstrang nach Anspruch 15, gekennzeichnet durch eine dauerelastische Dichtmasse.

17. Rohrstrang nach Anspruch 15 oder 16, gekennzeichnet durch eine aushärtende Dichtmasse.

18. Rohrstrang nach einem der Ansprüche 1 bis 17, dadurch gekennzeichnet, daß die Schraubgewinde (10, 12) eingängig mit mindestens einer, vorzugsweise 2 oder höchstvorzugsweise 3 und mehr, Windungen ausgebildet sind.

19. Rohrstrang nach einem der Ansprüche 1 bis 18, dadurch gekennzeichnet, daß die Schraubgewinde (10, 12) als gerundetes Gewinde, vorzugsweise Rundgewinde, ausgebildet sind.

20. Rohrstrang nach einem der Ansprüche 1 bis 19, dadurch gekennzeichnet, daß die Breite des Gewindeganges 3 bis 10 mm, vorzugsweise 4 bis 7 mm, beträgt.

21. Rohrstrang nach einem der Ansprüche 1 bis 20, dadurch gekennzeichnet, daß die Tiefe des Gewindeganges 2 bis 8 mm, vorzugsweise 3 bis 5 mm, beträgt.

22. Rohrstrang nach einem der Ansprüche 1 bis 21, dadurch gekennzeichnet, daß bei mehreren Gewindewindungen die Gewindesteigung so gewählt ist, daß - minimal - aufeinanderfolgende Gewindewindungen aneinander anschließen oder - maximal - zwischen sich einen axialen Abstand der Breite des Gewindeganges haben.

23. Rohrstrang nach einem der Ansprüche 1 bis 22, gekennzeichnet durch eine Metallrohrpaarung, deren Gewindeverbindung nahezu über die ganze Rohrlänge verläuft.

24. Rohrstrang nach Anspruch 23, dadurch gekennzeichnet, daß bei einem Metallrohr (2) das Gewinde (10) über die ganze Rohrlänge und bei dem anderen (2) das Gewinde (12) über die ganze Rohrlänge mit Ausnahme einer Zentrierstrecke (14) verläuft (Fig. 11).

25. Rohrstrang nach einem der Ansprüche 1 bis 24, gekennzeichnet durch eine einschraubbare Kondensatauffangschale (Fig. 8).

26. Rohrstrang nach einem der Ansprüche 1 bis 25, gekennzeichnet durch mindestens ein Metallrohr (2), das mindestens eine Rohrabzweigung (36) aufweist, die ihrerseits mit einem Schraubgewinde (38) versehen ist.

27. Rohrstrang nach Anspruch 26, gekennzeichnet durch einen Schraubverschluß (44) für die Rohrabzweigung (36).

28. Rohrstrang nach Anspruch 26 oder 27, gekennzeichnet durch einen an die Rohrabzweigung (36) anschraubbaren Rauchrohranschluß (40).

29. Rohrstrang nach Anspruch 28, dadurch gekennzeichnet, daß zwei miteinander zu verbindende Rohrenden (4, 6) einander zugeordneter Metallrohre (2) des Bausatzes beide mit Außengewinde (10) ausgebildet sind und eine zugeordnete Überwurfhülse (52) vorgesehen ist, die an ihrem einen Ende ein Links-Innengewinde und an ihrem anderen Ende ein Rechts-Innengewinde hat.

30. Rohrstrang nach einem der Ansprüche 1 bis 29, gekennzeichnet durch eine an ein Rohrende (4, 6) angeschraubte Dehnfugenmanschette und/oder eine Schachtabdeckung.

31. Rohrstrang nach einem der Ansprüche 1 bis 30, dadurch gekennzeichnet, daß wenigstens einige der Metallrohre (2) außen radiale Abstandhalter (56) tragen, die vorzugsweise auf das äußere Profil der Innengewinde (12) aufgeschraubt oder aufgeklemmt sind.

32. Rohrstrang nach Anspruch 31, dadurch gekennzeichnet, daß die Abstandhalter (56) rotationssymmetrisch um die Metallrohre (2) verteilt angeordnet sind.

33. Rohrstrang nach einem der Ansprüche 1 bis 32, dadurch gekennzeichnet, daß die Wandstärke der Metallrohre (2) mindestens 0,3 mm beträgt.

34. Rohrstrang nach einem der Ansprüche 1 bis 33, dadurch gekennzeichnet, daß die Wandstärke der Metallrohre (2) für den eingeschossigen Hausbau höchstens 0,6 mm, für den zwei- bis vierstöckigen Hausbau höchstens 1 mm, sonst höchstens 2 mm beträgt.

35. Rohrstrang nach einem der Ansprüche 1 bis 34, dadurch gekennzeichnet, daß die Metallrohre (2) aus Fe-, Cu- oder Al-Legierungen bestehen.

36. Rohrstrang nach einem der Ansprüche 1 bis 35, dadurch gekennzeichnet, daß die Metallrohre (2) stoßgeschweißte, vorzugsweise schutzgasgeschweißte, Metallrohre sind.

37. Rohrstrang nach einem der Ansprüche 1 bis 36, dadurch gekennzeichnet, daß ein Längenausgleichsrohr (z.B. gemäß Fig. 11) nur im Bereich des oberen Endes des Rohrstrangs angeordnet ist.

38. Rohrstrang nach einem der Ansprüche 7 bis 37, dadurch gekennzeichnet, daß das Ende der Zentrierstrecke am unteren Ende eines oben liegenden Metallrohres (2) tiefer liegt als das obere Ende des unten anschließenden Metallrohres (2).

39. Rohrstrang nach einem der Ansprüche 1 bis 38, dadurch gekennzeichnet, daß mindestens zwei axial aufeinander folgende Metallrohre (2), gegebenenfalls sogar alle, nicht bis zum Ende ihrer Verschraubungsstrecke bzw. nicht auf Anschlag zusammengeschraubt sind.

40. Verfahren zum Herstellen des Rohrstrangs nach einem der Ansprüche 1 bis 39 in einem zu sanierenden Schornstein, dadurch gekennzeichnet, daß die Metallrohre (2) sukzessive am oberen Ende eines schon abgelassenen Teils des Rohrstrangs angeschraubt werden.

41. Anwendung des Rohrstrangs nach einem der Ansprüche 1 bis 39 oder eines nach Anspruch 40 hergestellten Rohrstrangs als mit innerem Überdruck betriebene sogenannte "Abgasleitung".
